(19) Europäisches Patentamt
European Patent Office
Office européen des brevets

(11) Veröffentlichungsnummer: **0 082 382**
**B1**

# (12) EUROPÄISCHE PATENTSCHRIFT

(45) Veröffentlichungstag der Patentschrift: **26.02.86**

(51) Int. Cl.[4]: **C 08 L 77/00**, C 08 K 3/32

(21) Anmeldenummer: **82111230.7**

(22) Anmeldetag: **04.12.82**

(54) **Polyamidformmassen.**

(30) Priorität: **18.12.81 DE 3150272**

(43) Veröffentlichungstag der Anmeldung: **29.06.83 Patentblatt 83/26**

(45) Bekanntmachung des Hinweises auf die Patenterteilung: **26.02.86 Patentblatt 86/9**

(84) Benannte Vertragsstaaten: **DE FR GB IT**

(56) Entgegenhaltungen: **DE - A - 2 133 895**

(73) Patentinhaber: **BAYER AG, Konzernverwaltung RP Patentabteilung, D-5090 Leverkusen 1 Bayerwerk (DE)**

(72) Erfinder: **Tima, Milan-Josef, Dr., Roggendorfstrasse 57, D-5000 Köln 80 (DE)**

EP 0 082 382 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die wirtschaftliche Herstellung von Führungen, Rollen, Gleitlagern, Zahnrädern durch Spritzgießen von thermoplastischen Kunststoffen hat zu einem weitgehenden Ersatz von Metall für diese Anwendungen geführt.

Zusätzlich zu den Verarbeitungsvorteilen bieten Teile aus thermoplastischen Kunststoffen aufgrund der Stoß- und Vibrationsdämpfung, Laufruhe und Geräuschsarmut.

Die mechanischen Eigenschaften der thermoplastischen Kunststoffe können durch verschiedene Zusätze gezielt modifiziert werden. So kann auch die Gleitfähigkeit der Fertigteile verbessert werden, indem man selbstschmierende Stoffe zu den thermoplastischen Kunststoffen gibt, die den Reibkoeffizienten vermindern.

Als wirksame Gleitmittel für Polyamidformmassen werden heute im technischen Maßstab Polytetrafluorethylen, Silikone, Graphitpulver oder Molybdändisulfid eingesetzt. Diese Gleitmittel und ihre Verwendung sind beispielsweise in der US—PS—2 246 086, US—PS—2 156 803, US—PS—2 284 785, US—PS—2 855 377, US—PS—2 998 397, US—PS—2 695 425 und US—PS—2 975 128 beschrieben.

Polytetrafluorethylen hat den Nachteil, daß es in größeren Mengen (ca. 20 Gew.-%) dem Polyamid zugesetzt werden muß, um eine deutliche Reduzierung der Reibung zu erreichen.

Die Wirkung von Silikon (Zugabe ca. 2 Gew.-%) basiert hauptsächlich auf seiner Diffusion oder kontinuierlichen Ausschwitzung aus dem Fertigteil, womit eine zeitliche Begrenzung der Gleitwirkung verbunden ist.

Die schwarze Eigenfarbe des Graphits sowie die des Molybdändisulfids erschwert die Einstellung heller Farbtöne bei den Formmassen. Die zur Überdeckung der dunklen Farbe notwendige Menge an Weißpigmenten führt zur Verschlechterung der mechanischen Eigenschaften.

Mit Hilfe der erfindungsgemäß eingesetzten Gleitmittel gelingt es, Polyamidformmassen herzustellen, die zufriedenstellende Gleitcharakteristika zeigen, sich zur Herstellung von Formkörpern eignen und insbesondere ermöglichen, gleitfähige Polyamidformmassen in hellen Farben bereitzustellen, da alle Additive fast farblos oder weiß sind.

Gegenstand der vorliegenden Erfindung sind daher gleitfähige Polyamidformmassen, die gegebenenfalls bis zu 60 Gew.-%, bezogen auf die Gesamtformmassen, Verstärkungs- und/oder Füllstoffe und gegebenenfalls weitere übliche Hilfs- und/oder Zusatzstoffe und die dadurch gekennzeichnet sind, daß sie 0,1—10 Gew.-%, bezogen auf die Gesamtformmassen, Zinkpyrophosphat enthalten.

Als thermoplastische Polyamidharze können Polyamide verwendet werden, die durch Polymerisation von Lactamen mit wenigstens 5 Ringgliedern oder einer entsprechenden ε-Aminocarbonsäure, wie z.B. ε-Caprolactam, Aminocapronsäure, Enatholactam, 7-Aminohexansäure, 9-Aminononansäure, 11-Aminoundecansäure, α-Pyrrolidon und Piperidon, erhalten werden. Außerdem Polyamide, die durch Polykondensation von aliphatischen Diaminen, wie Hexamethylendiamin, 2,2,4-, 2,4,4-Trimethylhexamethylendiamin, Isophorondiamin, 1,3-, 1,4-Bisaminocyclohexan, Bisaminocyclohexyl-alkane, Xylylendiamin und aliphatischen oder aromatischen Dicarbonsäuren, wie Adipinsäure, Sebacinsäure, Azelaeinsäure, Dodecandicarbonsäure, Glutarsäure, Cyclohexandicarbonsäure, Isophthalsäure, Terephthalsäure erhalten werden.

Außerdem kommen Polyamide in Betracht, die aus den genannten aliphatischen Dicarbonsäuren und aromatischen Diaminen, wie z.B. 1,3- und 1,4-Diaminobenzol hergestellt werden sowie Polyamid-Gemische und Copolyamide aus allen genannten Komponenten, soweit aliphatische oder teilaliphatische Polyamide entstehen. Besonders bevorzugt sind Polyamid 6 und Polyamid 66.

Das Polyamid kann noch weitere thermoplastische Kunststoffe enthalten, z.B. Polyester, Polyolefine, Polytetrafluorethylen, ABS, Acrylsäure oder Ethylen-Vinylacetat-Copolymere in Mengen bis zu 50 Gew.-%, bezogen auf Polyamide.

Insbesondere wird Zinkpyrophosphat der Formel $Zn_2P_2O_7 \cdot H_2O$ bevorzugt.

Das Salz wird dem Polyamid in einer Menge von 0,1 bis 10 Gew.-%, vorzugsweise 0,5 bis 3 Gew.-% zugegeben. Eine ausreichende Gleitwirkung wird bereits mit 0,5 bis 1,5 Gew.-% erzielt. Auch ist es natürlich möglich, den erfindungsgemäßen Gleitmitteln noch weitere Gleitmittel, z.B. Kohlenstoffaser oder Graphitpulver in Mengen bis zu 10 Gew.-%, zuzusetzen.

Verstärkungs- und Füllstoffe können in den erfindungsgemäßen Polyamidformmassen bis zu 60 Gew.-% enthalten. Dazu sind folgende zu nennen: Glasfasern, Kohlenstoff-Fasern, Asbestfasern, Glaskugeln, Kaolin, Talkum, Glimmer, Wollastonit, Microvit, Kreide, Siliziumdioxid, Graphit, Gips und andere übliche Zusatzstoffe, wie organische und anorganische Pigmente und Farbstoffe, so z.B. Phthalocyanine, Titandioxid oder Flammschutzmittel.

Als Stabilisatoren gegen die Einwirkung von Wärme können den erfindungsgemäßen Polyamidformmassen Kupferverbindungen oder ein Gemisch aus einer Kupferverbindung und einem Alkalimetallhalogenid in Mengen von 0,001 bis 1 Gew.-% zugesetzt werden.

Geeignete Kupferverbindungen umfassen anorganische und organische Kupfersalze.

Beispielhaft seien erwähnt: Kupfer-I-chlorid, Kupfer-II-sulfat, Kupfer-I-jodid, Kupfer-II-phosphat, Kupfer-II-acetat, Kupfer-II-stearat, Kupfer-II-benzoat und Kupfer-Chelat-Verbindungen.

Geeignete Alkalimetallhalogenide umfassen Calciumjodid, Kaliumbromid, Natriumchlorid, Natriumbromid.

Als Hilfs- und Zusatzstoffe können zu den erfindungsgemäßen Polyamidharzmassen aromatische und/oder höhere aliphatische Carbonsäuren sowie deren Alkalimetall- oder Erdalkalimetallsalze, wie z.B. Natriumstearat, Calciumstearat, Isophthalsäure, Terephthalsäure in Mengen von 0,1 bis 1 Gew.-% eingearbeitet werden.

Ferner ist es möglich, beliebige bekannte Antistatikmittel, wie leitfähiger Ruß oder quaternäre Ammoniumsalze, zuzusetzen.

Die Zusatzstoffe können dem Polyamidharz gemäß verschiedensten bekannten Verfahren zugemischt werden, und zwar vorzugsweise vor der Formgebung. Eine bevorzugte Methode besteht darin, die Zusatzstoffe mit dem Polyamid trocken zu vermischen. Diese Mischung kann aus der Schmelze als Granulat extrudiert werden. Es ist auch möglich, die Zusatzstoffe über bekannte Dosiervorrichtungen in die Polyamid-Schmelze im Extruder einzuarbeiten. Des weiteren können zunächst Konzentrate hergestellt werden, indem man große Mengen der Zusatzstoffe mit dem Polyamidharz vermischt und dieses Konzentrat dann mit dem Hauptteil des Polyamidharzes kompoundiert.

Die zur Einarbeitung der Zusatzstoffe erforderlichen Temperaturen werden im wesentlichen durch die Schmelztemperatur des verwendeten Polyamids bestimmt.

Die erfindungsgemäßen thermoplastischen Polyamidformmassen zeigen eine verbesserte Gleitfähigkeit bei ausgezeichneten mechanischen Eigenschaften und ausgezeichneter Verarbeitbarkeit. Die Polyamidharzmassen sind in hellen Farben zugänglich.

In den nachfolgenden Beispielen sind, wenn nicht anders erwähnt, die Prozente Gewichtsprozente und Teile Gewichtsteile.

Beispiele 1—8

Die Einarbeitung des Gleitmittels in die Polyamide erfolgte, gegebenenfalls gemeinsam mit Glasfasern, auf einem gegenläufigen Doppelwellenextruder PT 55 der Firma Reifenhäuser unter den für Polyamide üblichen Bedingungen. Der abgezogene Strang wird gekühlt, granuliert und getrocknet. Anschließend wird das Granulat auf einer Spritzgießmaschine A 270$^R$ der Firma Arburg zu Prüfkörpern zur Bestimmung der Reibkoeffizienten vorgespritzt. Die Reibkoeffizienten gegen Stahl, Werkstoff- Nr. 1.118-, wurden mit einem Druckscheibengerät in Anlehnung an DIN 53 375 bestimmt. In Tabelle 1 sind die Zusammensetzungen der Versuchsansätze und die Ergebnisse der Gleitprüfungen zusammengestellt.

TABELLE 1

| Beispiele | Polyamid | Gew.-% PA in der Mischung | Gew.-% Zink-II-Pyrophosphat | Reibkoeffizient statisch 2,8 Kp/cm$^2$ | Dynamisch 2,8 kg/cm$^2$ 15,24 m/min |
|---|---|---|---|---|---|
| 1 Vergleich | PA 6 η rel* 2,9 | 100 | — | 0,22 | 0,26 |
| 2 | „ | 99 | 1 | 0,11 | 0,17 |
| 3 Vergleich | PA 6+30% Glasfaser | 70 | — | 0,26 | 0,32 |
| 4 | „ | 69 | 1 | 0,12 | 0,19 |
| 5 Vergleich | PA 66 η rel 2,9 | 100 | — | 0,21 | 0,27 |
| 6 | „ | 99 | 1 | 0,12 | 0,20 |
| 7 Vergleich | PA 66+30% Glasfaser | 70 | — | 0,26 | 0,32 |
| 8 | „ | 69 | 1 | 0,13 | 0,21 |

*) relative Viskosität gemessen in einer Lösung aus 1 g Polyamid in 100 ml m-Kresol bei 25°C

**Patentansprüche**

1. Thermoplastische Polyamidformmassen, die gegebenenfalls bis zu 60 Gew.-%, bezogen auf die Gesamtmasse, Verstärkungs- und/oder Füllstoffe und gegebenenfalls weitere übliche Hilfs- oder Zusatzstoffe enthalten, dadurch gekennzeichnet, daß sie 0,1—10 Gew.-% bezogen auf die Gesamtmasse, Zinkpyrophosphat enthalten.

2. Polyamidformmassen nach Anspruch 1, dadurch gekennzeichnet, daß sie als Salz Zinkpyrophosphat der Formel

$$Zn_2P_2O_7H_2O$$

enthalten.

3. Polyamidformmassen nach Anspruch 1 oder 2, dadurch gekennzeichnet, daß sie 0,5 bis 3 Gew.-% des Salzes enthalten.

4. Polyamidformmassen nach Anspruch 1 bis 3, dadurch gekennzeichnet, daß sie 0,5—1,5 Gew.-% des Salzes enthalten.

5. Polyamidformmassen nach Anspruch 1—4, dadurch gekennzeichnet, daß als Polyamid Polyamid-6 und/oder Polyamid-6,6 verwendet wird.

6. Verwendung von Zinkpyrophosphat als Gleitmittel in Polyamidformmassen.

7. Verwendung des Gleitmittels nach Anspruch 6 in Mengen von 0,1—10 Gew.-%.

8. Formkörper aus Polyamidformmassen nach Ansprüchen 1 bis 5.

**Revendications**

1. Mélanges à mouler thermoplastiques à base de polyamide, qui contiennent éventuellement jusqu'à 60% en poids, par rapport au mélange total, de substances de renforcement et/ou de charges et le cas échéant d'autres adjuvants ou additifs classiques, caractérisés en ce qu'ils contiennent 0,1 à 10% en poids de pyrophosphate de zinc par rapport au mélange total.

2. Mélanges à mouler à base de polyamide suivant la revendication 1, caractérisés en ce qu'ils contiennent comme sel du pyrophosphate de zinc de formule

$$Zn_2P_2O_7H_2O$$

3. Mélanges à mouler à base de polyamide suivant la revendication 1 ou 2, caractérisés en ce qu'ils contiennent 0,5 à 3% en poids du sel.

4. Mélanges à mouler à base de polyamide suivant les revendications 1 à 3, caractérisés en ce qu'ils contiennent 0,5 à 1,5% en poids du sel.

5. Mélanges à mouler à base de polyamide suivant les revendications 1 à 4, caractérisés en ce qu'on utilise comme polyamide du polyamide 6 et/ou du polyamide 6,6.

6. Utilisation du pyrophosphate du zinc comme lubrifiant dans des mélanges à mouler à base de polyamide.

7. Utilisation du lubrifiant suivant la revendication 6 en quantités de 0,1 à 10% en poids.

8. Pièces moulées obtenues à partir de mélanges à mouler à base de polyamide suivant les revendications 1 à 5.

**Claims**

1. Thermoplastic polyamide moulding compositions which optionally contain up to 60% by weight, based on the total composition, of reinforcing substances and/or fillers and optionally other customary auxiliaries or additives, characterised in that they contain 0.1—10% by weight, based on the total composition, of zinc pyrophosphate.

2. Polyamide moulding compositions according to Claim 1, characterised in that they contain zinc pyrophosphate of the formula

$$Zn_2P_2O_7H_2O$$

as the salt.

3. Polyamide moulding compositions according to Claim 1 or 2, characterised in that they contain 0.5 to 3% by weight of the salt.

4. Polyamide moulding compositions according to Claim 1 to 3, characterised in that they contain 0.5—1.5% by weight of the salt.

5. Polyamide moulding compositions according to Claim 1—4, characterised in that polyamide 6 and/or polyamide 6,6 is used as the polyamide.

6. Use of zinc pyrophosphate as a lubricant in polyamide moulding compositions.

7. Use of the lubricant according to Claim 6 in quantities of 0.1—10% by weight.

8. Mouldings produced from polyamide moulding compositions according to Claims 1 to 5.